# EUROPEAN PATENT APPLICATION

(11) **EP 3 457 382 A1**
(43) Date of publication of application: **20.03.2019**
(21) Application number: 17191248.8
(22) Date of filing: 15.09.2017
(51) Int. Cl.: G08G 1/16, B60W 30/095

(54) **METHOD FOR PLANNING A COLLISION AVOIDANCE MANEUVER, CORRESPONDING CONTROL UNIT AND VEHICLE EQUIPPED WITH A CONTROL UNIT AS WELL AS COMPUTER PROGRAM**

(71) Applicant: VOLKSWAGEN AKTIENGESELLSCHAFT, 38440 Wolfsburg (DE)
(72) Inventor: Alieiev, Roman, 39576 Stendal (DE); Hehn, Dr. Thorsten, 38446 Wolfsburg (DE); Kwoczek, Andreas, 38165 Lehre (DE)

(57) **Abstract**

The proposal concerns a method for planning a collision avoidance maneuver which may be used in the scenarios of cooperative driving or autonomous driving. The method comprises the steps of observing the surroundings of a vehicle (31), determining the risk of a collision, if there is a risk of a collision, and starting an information exchange phase for the involved vehicles (31, 32, 33). During the information exchange phase an involved vehicle (31, 32, 33) submits its own determined driving hose (FS) to the involved vehicles (31, 32, 33). An evaluation phase is started in which a vehicle (31, 32, 33) evaluates its own and the received driving hoses (FS) from the other involved vehicles (31, 32, 33). Also, a mutual safe region (31S, 32S, 33S) for the involved vehicles (31, 32, 33) to go for avoiding the collision is determined. This may be submitted to the involved vehicles (31, 32, 33) for checking with the own safety requirements. If the safety requirements are not fulfilled, the vehicle (31, 32, 33) performs a change of state from collision avoidance state to collision minimization state and informs the other involved vehicles (31, 32, 33) about the change of state.

## Description

The disclosure relates to a method for planning a collision avoidance maneuver by means of car to car communication means. The disclosure further relates to a corresponding control unit, and a vehicle being equipped with such control unit as well as a corresponding computer program.

Autonomous driving (sometimes referred to as automatic driving, automated driving or piloted driving) is the movement of vehicles, mobile robots and driverless transport systems which are largely autonomous. There are different degrees of autonomous driving. In this case, autonomous driving is also spoken at certain levels even if a driver is still present in the vehicle, who possibly only takes over the monitoring of the automatic driving operation. In Europe, the various transport ministries (in Germany, the Federal Institute for Road Systems (Bundesanstalt fur Straßenwesen) was involved) worked together and defined the following autonomous stages.
- Level 0: "Driver only", the driver drives himself, steers, gives gas, brakes, etc..
- Level 1: Certain assistance systems help with vehicle operation (including a cruise control system - Automatic Cruise Control ACC).
- Level 2: Partial automation. Therein, automatic parking, tracking function, general longitudinal guidance, acceleration, deceleration, etc. are taken over by the assistance systems (including collision avoidance).
- Level 3: High automation. The driver does not have to monitor the system continuously. The vehicle independently performs functions such as the triggering of the turn signal, lane change and tracking. The driver can turn to other things, but if requested, the system is requested to take over the lead within a pre-warning period. This form of autonomy is technically feasible on motorways. Legislators are working to allow Level 3 vehicles. The legal framework has already been created.
- Level 4: Full automation. The guidance of the vehicle is permanently adopted by the system. If the system is no longer able to handle the tasks, the driver can be asked to take the lead.
- Level 5: No driver required. Apart from setting the target and starting the system, no human intervention is required.
Future cooperative driving applications are envisioned to significantly improve efficiency and comfort of automated driving. Increase in cooperation between vehicles pose specific requirements on communication system and the way messages are exchanged among cooperating vehicles. The field of use, where the invention is concerned with, is from Level 2 onwards and concerns the important aspect of collision avoidance. Such applications more in particular the cooperative collision avoidance pose very strict requirements on the overall time to build a cooperative decision and require simple, reliable and efficient solution.

In these systems, an exact position determination of the vehicle from stage to stage is important as well as a precise observation of the surroundings of the vehicle. In particular, position determination techniques are known which take into account absolute position data and odometry position data in determining the estimated position of the motor vehicle.

In this case, the absolute position data indicate the measured position of the motor vehicle at a certain time in absolute values, for example in a UTM or WGS84 reference coordinate system. Optionally, the absolute position data may also be provided with an orientation, e.g. a current direction of movement of the motor vehicle. A combination of position and orientation is often referred to as a pose. The position is usually expressed two-dimensionally in a Cartesian coordinate system.

The odometry position data, on the other hand, indicate a self-movement or relative movement of the motor vehicle, for example in an arbitrarily defined reference coordinate system or in the so-called vehicle coordinate system ("body frame"). In this case, the self-movement, is indicated in each case relative to a preceding position of the motor vehicle.

The cooperative collision avoidance application is one of the key applications in the field of cooperative vehicular systems. There are multiple approaches known in the literature which propose methods in realizing the message exchange flow.

US 2013/0325306 A1 describes a cooperative driving and collision avoidance system with distributed receding horizon control. A controller in a coordinating vehicle, comprises:
a communication terminal configured to receive trajectory messages from a plurality of second coordinating vehicles in a communication range, the trajectory messages including vehicle trajectory information for a predetermined update interval. A computer in the controller performs the following tasks:
   Task 1: Generate a nominal "assumed trajectory" for the next planning horizon, which may involve solving an optimization problem.
   Task 2: Exchange (transmit and receive) assumed trajectories with each neighbor.
   Task 3: Check assumed trajectories (self against neighbors) for conflicts, and resolve any conflicts as necessary. Computing a conflict-resolving maneuver involves solving an optimization problem.
   Task 4: Solve an optimization problem to generate the next implemented maneuver, if not already done in tasks 1 or 3. This is required when initial maneuvers are simple to compute (i.e., no optimization required in task 1) and such maneuvers do not result in a conflict (no optimization required in task 3).

From WO 2016/020290 A1 a system for automated cooperative driving is known. This system is comprising a position determining unit for determining the position of a vehicle, a reception unit for receiving surrounding data from at least one surrounding vehicle, a signal processing unit for calculating a trajectory of the own vehicle by means of information about the own vehicle, wherein, by means of the surrounding data, the signal processing unit calculates whether the trajectory of the own vehicle cuts a trajectory of an object or of the second vehicle, and hence whether the vehicle (Vx1) collides with this object and/or the second vehicle.

For the cooperative or autonomous driving, the exchange of certain messages of the vehicles among each other is very important. Such information included in messages may be position information, surroundings information, trajectory information, warning information, control information and more.

All these types of information require an extensive message exchange. Moreover, to come to an agreement about a maneuver, further messages need to be exchanged to build the common cooperative decision, about the coordinated maneuver. There is an article from Kai Franke; Mark Gonter; Michael During; Karsten Lemmer; Reza Balaghiasefi; Ferit Küçükay, which describes this technique. The article has the title "A reference architecture for CISS/CDAS within the field of cooperative driving", and was published on 2014 International Conference on Connected Vehicles and Expo (ICCVE), 2014. The article describes the following approach: In this case first one vehicle detects the potential collision problem and triggers the start of the cooperative collision avoidance maneuver planning by sending a corresponding message. After this, the vehicles which are selected or have agreed on cooperation, exchange the information about the environment among each other. As a next step the involved vehicles based on the exchanged information calculate their own and the trajectories for other involved vehicles. Once the suggested trajectories were calculated, each vehicle rates each solution based on its own ego preferences and sends ranks and trajectories to other involved partners. Once the exchange process has been completed, each vehicle compares the ranks of all received suggested trajectories and selects the one with the maximum overall ranking. The selected choice is then being sent to other partners to make all partners understand the selected own trajectory and the overall maneuver.

In DE 10 2015 221 817 A1 another proposed idea is described, which assumes an implicit information exchange without any acknowledgment on the selected path at all. In this case each vehicle periodically sends the planned as well as one alternative planned trajectory on the information about environment and information received from other partners. In this approach each vehicle assumes that other vehicles, once they receive information about a planned trajectory of its neighbor, would correspondingly adopt their own plan such that the maneuver of all vehicles is optimized.

The inventors identified different problems with these approaches described above. The main challenge with the approach described in the article "A reference architecture for CISS/CDAS within the field of cooperative driving" is that it requires extensive message exchange among partners within a very short time over an error prone communication network.

The problem with the other approaches is that the algorithm assumes that every new sent trajectory update ultimately leads to the direction of the global optima for the given cooperative maneuver. In reality, it may lead to a local optima or even result in a constant oscillation of a next step at the same level without any move into the direction of global optima.

There is therefore a need for an improved approach for a collision avoidance system which avoids the above mentioned disadvantages. This corresponds to the problem of the invention.

This object is achieved by a method for according to claim 1, a computing unit according to claim 14, a vehicle according to claim 15 and a computer program according to claim 16. The dependent claims include advantageous further developments and improvements of the invention as described below.

The solution according to the proposal comprises the following steps of observing the surroundings of a vehicle and determining the risk of a collision. If there is a risk of a collision, starting an information exchange phase for the involved vehicles where the information about the observations from the other vehicles is collected. During the information exchange phase an involved vehicle submits its so-called own driving hose to the involved vehicles which includes decisive information from its own observations. Then an evaluation phase is started in which a vehicle evaluates its own and the received driving hoses from the other involved vehicles and determines a mutual safe region for the involved vehicles to go for avoiding the collision.

In an enhanced embodiment this mutual safe region is submitted to the involved vehicles, which perform a step of checking if the mutual safe region received from the other involved vehicles fulfills their own safety requirements. If this is not the case, such vehicle will change its state from collision avoidance state to collision minimization state and inform the other involved vehicles about the change of state. This proposal has the advantages that the amount of information exchange about suggested trajectories can be subjectively reduced. In particular there are far less messages with all their overhead to be exchanged, i.e. the overall performance of the communication system is subjectively increased. This is certainly a great advantage since with all the traffic on the roads the car-to-car communication could easily outperform the mobile communication system otherwise. If the safety requirements are fulfilled, the vehicle selects a preferred trajectory from the mutual safe region.

Since each vehicle calculates the mutual safety region, it is not important anymore which exact trajectory the vehicle actually selects for the next driving moment as long as this trajectory is within the safety region. The main problem with the exchange of unique trajectories is that they are discrete and if one is changed by any little value, it is already a new trajectory and other vehicles have to be informed about it. That's one important aspect, why according to the proposal the safety region is taken into accounts as the most important parameter and the exchange of actual trajectories is an option behind this which may be utilized as an additional feature (nice to have, but not must have).

In other words the proposal allows finding a common global solution for the collision avoidance problem wherein a minimum number of messages need to be exchanged. This advantage stems from the fact that driving hoses will be exchanged which contain information about longitudinal and lateral position of the vehicle over time and over the probability that the vehicle reaches the point in the regarded time slot. Therefore, the whole of the possible trajectories is comprised in this driving hose such that it is somewhat guaranteed that the global minimum, i.e. the maneuver with safest driving conditions to avoid collision is included in the data set.

In summary, the proposed method comprises the following major advantages:
- It provides for finding a common global solution having a minimum number of messages to be exchanged.
- This approach results in a solution which is suitable for all vehicles and does not require a repetition phase compared to other solutions where it may happen that some vehicles do not agree with the proposed trajectory and may ask for the restart of the algorithm.
- Some other approaches do not require the cooperative agreement, but assume that the vehicles positively react on the driving intention. The problem of such references may occur, when vehicles due to their own capabilities cannot positively (i.e. as requested by another vehicle) react on the request. This corresponds to the local optima problem, if some driving action is seen as "good" from the point of one vehicle, but is actually not optimal from the global perspective of all vehicles. In this situation, a first vehicle will not react as at was expected by the other vehicle and the other vehicle will need additional time to react on the unexpected behavior of the first vehicle. Due to the absence of the complete information from all vehicles involved in the maneuver, such situation (when the proposed decision is being trapped in the local optima) may repeat multiple times without leading to any progress in the collision avoidance. This problem is avoided in the proposed approach.
- It also provides a simple way to control whether the maneuver is being conducted successfully.

It is advantageous if the driving hose of a vehicle is represented in the form of a 4-dimensional tensor with information about longitudinal and lateral position of the vehicle over time and over the probability that the vehicles reaches the corresponding point in time.

For performing the evaluation of the driving hoses with a computer it is advantageous to calculate a correlation of the driving hoses received from the other involved vehicles over space and time with the own driving hose. Then the global minimum in the correlation calculation result determines where the mutual safe region is located.

It is advantageous for the maneuver planning that each vehicle selects a preferred trajectory for itself out of the mutual safe region, and to submit the preferred trajectory to the involved vehicles for further checking. Thus the involved vehicles can check again whether there is a risk of a collision in the planned maneuver.

The efficiency of the information exchange phase can be increased if the technique of linear network coding is applied when submitting the own driving hose. Even if a message with a driving hose could not be received due to an error prone channel, there is information present about the lost driving hose in the submissions from the other involved vehicles such that in the evaluation phase the lost diving hose is not totally neglected. This increases subjectively the robustness of the information exchange phase communication.

Preferably for linear network coding the own driving hose will be linearly combined with the previously received driving hoses from the other involved vehicles and the generation matrix for the linear combination is also included in the message submitting the own driving hose such that station receiving this message can easily decode the message.

As one example, the technique of random linear network coding RLNC may be used for linear network coding.

An efficient way to distribute the information of a driving hose is when the involved vehicles broadcast the driving hose in the information exchange phase. Thus with one message only all the involved vehicles will get the information without the need to send it multiple times.

In particular, it is advantageous that the minimum allowed distance between two vehicles at a time in the future and/or the probability that two vehicles end up at the same place at a time in the future are used as a safety requirement.

Moreover, it is advantageous that the vehicle which detects the risk of a collision starts the information exchange phase by broadcasting a warning message to the surrounding vehicles.

Further on, it is advantageous, that a timer for the information exchange phase is started in the vehicle which detected the risk of a collision and wherein the warning message includes information about the timer for the information exchange phase. This way, all involved vehicles know in which time they should react sending their own driving hose before the information exchange phase is closed by the alarming vehicle.

Then it is advantageous for the implementation that also a timer for the evaluation phase is started and when this timer expires without having received a preferred trajectory from one of the involved vehicles that the timer setting vehicle changes state from collision avoidance state to collision minimization state and informs the other involved vehicles about the change of state.

If one of the involved vehicles in the maneuver does not send any message within the time interval of the first timer, then this vehicle is treated as non-cooperative by other the other involved vehicles. But among the other vehicles there can be still a cooperative collision avoidance maneuver carried out.

Then, if after correlation of all exchanged driving hoses no global solution is found which fulfills the "safety" criteria at least by one of the cooperating vehicles, then such vehicle changes its state to collision minimization and informs the other vehicles about it. Corresponding advantages are apparent for a control unit according to the proposal and a computer program according to the proposal as claimed.

An exemplary embodiment of the invention is illustrated in the drawings and is explained in more detail below with reference to the figures.

In the drawings:
- Fig. 1: The principle of vehicle communication via mobile radio;
- Fig. 2: The principle of object detection with distance and velocity in a body frame coordinate system of an observer vehicle;
- Fig. 3: Shows a block diagram for a vehicle communication network with various vehicle electronics components;
- Fig. 4: A representation of driving hose contours in front of a moving vehicle;
- Fig. 5: A representation of the planning of an evasive maneuver of an observer vehicle in front of which an obstacle appears;
- Fig. 6: Various other forms of representation of a driving hose;
- Fig. 7: The typical dangerous driving situation during an overtaking process;
- Fig. 8: The evaluation results of the participating vehicles determined by correlation calculation of the radio-exchanged data sets for collision avoidance;
- Fig. 9: The planned evasive maneuvers of the vehicles involved; and
- Fig. 10: The course of the procedure for cooperative collision avoidance.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

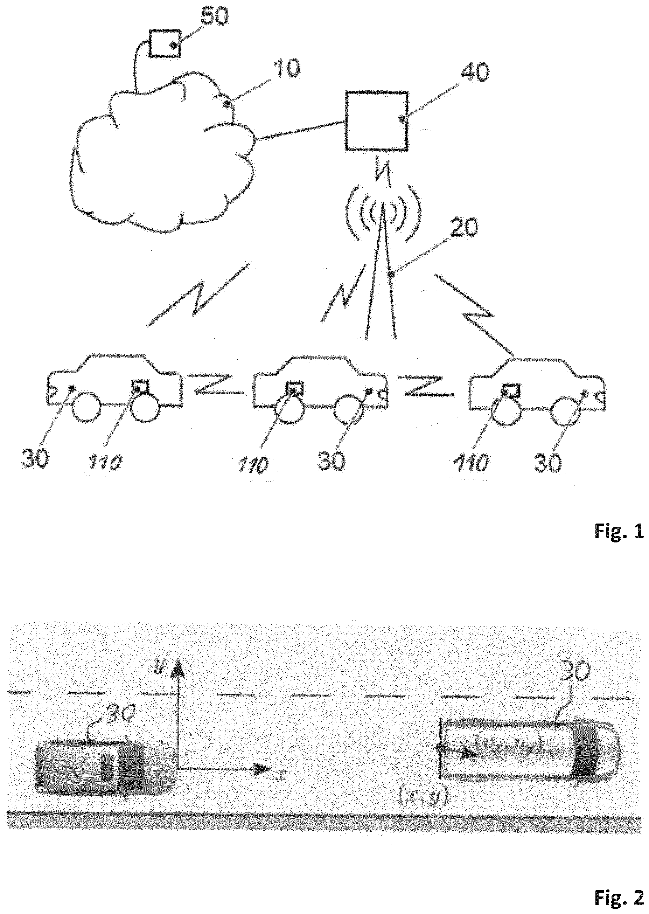

FIG. 1 shows the principle of vehicle communication using mobile radio. The vehicles are labeled with reference number 30. The term vehicle is to be understood as a collective term for motor vehicles with an internal combustion engine or an electric motor, whether for bicycles with or without an electric motor or other vehicles powered by muscle, or for vehicles with one, two, four or more wheels. Whether for motorcycles, passenger cars, trucks, buses, agricultural vehicles or construction machines. The list is not exhaustive and includes other vehicle categories.

However, vehicle communication, in particular vehicle direct communication, is necessary for this purpose. Various systems for vehicle communication are developed. Examples include WLAN-based vehicle communication, also called "ad-hoc domain", and vehicle communication in the field of mobile radio networks. In the case of mobile radio-based technology, however, the base station has to transmit the messages from vehicle to vehicle. This is the area where communication takes place in the so-called "Infrastructure Domain". For the future mobile radio generation, the vehicle direct communication is also made possible. In LTE, according to Long Term Evolution, this variant is called LTE-V, in the case of the 5G initiative this variant is called D2D.

The vehicles in FIG. 1 are each equipped with a communication module 110, which serves as a transmitting and receiving unit for communication in a mobile radio network. The vehicle 30 here corresponds to a mobile radio network subscriber station because of the integrated communication module 110. All messages from the vehicles (uplink) and to the vehicles (downlink) are routed either via a base station 20 which serves a mobile radio cell or, in the case of direct vehicle communication (Sidelink), directly between the vehicles 30. If the vehicles 30 are within this mobile radio cell, they are registered or logged in at the base station 20. If they leave the mobile cell, they are handed over to the neighboring cell (handover) and accordingly logged out or logged off at the base station 20. The base station 20 also provides access to the Internet so that the vehicles 30 or all other mobile radio subscribers are supplied with Internet data in the mobile radio cell. For this purpose, the base station 20 is connected to the EPC 40 (Evolved Packet Core) via the so-called S1 interface.

A central computer 50 is also accessible via the Internet 10 or another wide area network WAN. This may be located in a traffic control center to which e.g. some of the position data or trajectory information of the individual vehicles 30 may be reported.

Such mobile radio technologies are standardized and reference is made here to the corresponding specifications of mobile radio standards. As a modern example of a mobile radio standard, reference is made to the 3GPP initiative and the LTE standard (Long Term Evolution). Many of the related ETSI specifications are currently available in the version 14. The following is mentioned as an example: ETSI TS 136 213 V13.0.0 (2016-05); Evolved Universal Terrestrial Radio Access (E-UTRA); Physical layer procedures (3GPP TS 36.213 version 13.0.0 Release 13).

Fig. 2 shows the principle of surrounding observation by an observer vehicle 31 observing a preceding vehicle 32. The sensor system, which is used to capture the environmental objects in the driver assistance, is based on different measuring methods depending on the application. Widespread technologies are among others Radar corresponding to Radio Detection and Ranging, Lidar corresponding to Light detection and ranging, cameras 2D and 3D and ultrasonic sensors.

For the present invention, a sensor system is used which allows the measurement of distances in longitudinal and axial direction as well as the relative speed in the longitudinal and transverse directions.

The movement between the observer vehicle 31 and the preceding vehicle 32 is determined as a measured relative longitudinal and lateral distance with sx and sy, and vx and vy are used as the measured relative longitudinal and transverse speed components, as shown in Fig. 2.

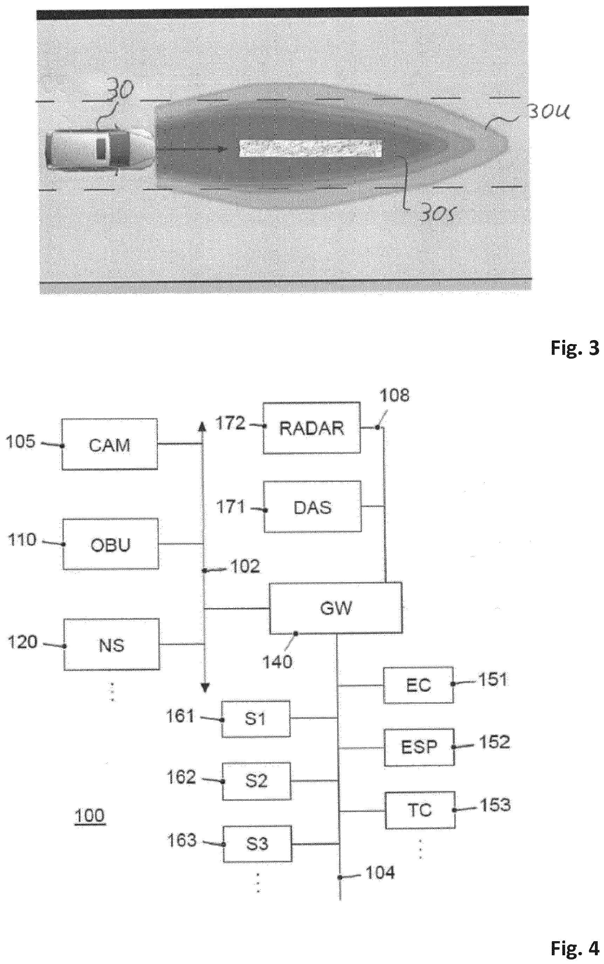

Fig. 3 shows a car 30 and illustrates how its own possible movement in the future could be described. The predicted self-movement is described by a driving hose that spans the vehicle trajectories within the next few seconds. The probability that the car will reach a point inside the driving hose is indicated with different grey values. The outer area 30U of the driving hose represents the area with a relatively low likelihood that the car will reach such points. The inner area labelled 30S is the area where the car will be positioned with a relatively high likelihood.

FIG. 4 shows the typical construction of an on-board network of a modern motor vehicle. Reference numeral 151 denotes an engine control unit. The reference numeral 152 corresponds to an ESC control unit corresponding to electronic stability control and the reference numeral 153 denotes a transmission control unit. Further control devices, such as a vehicle dynamics control unit, etc., may be provided in the motor vehicle. The networking of such control units, all of which are allocated to the category of the drive train, typically occurs with the CAN bus system (controller area network) 104. Since various sensors are installed in the motor vehicle and these are no longer only connected to individual control units, such sensor data are also distributed via the bus system 104 to the individual control devices. Examples of sensors in the motor vehicle are wheel speed sensors, steering angle sensors, acceleration sensors, rotary data sensors, tire pressure sensors, distance sensors, knock sensors, air sensor sensors, etc. The various sensors with which the vehicle is equipped are designated by the reference number 161, 162, 163 in Fig 4.

However, the modern motor vehicle can also have further components such as video cameras 105, e.g. As a reversing camera or as a driver monitoring camera, as well as a LIDAR or RADAR device for the realization of a radar system or for implementing a distance warning or collision warning/avoidance device.

A navigation system 120, which is also installed in the area of the cockpit, is often distinguished from this. The route, which is displayed on a map, can of course also be displayed on the display in the cockpit. Other components, such as a hands-free system, may be present but are not shown in detail. Reference numeral 110 denotes an on-board unit. This on-board unit 110 corresponds to a communication module via which the vehicle can receive and transmit mobile data. Typically, this is a mobile radio communication module, e.g. according to the LTE standard. All these devices are assigned to the infotainment area. They are therefore networked via a bus system 102 designed for the special needs of this device category. A high speed CAN bus is one example, which could be applied. As a further example, an Ethernet-Bus 108 is shown which connects only the two components driver assistance controller 171 and RADAR device 172. The Ethernet-Bus is a choice also for this communication bus 108 due to its higher bandwidth for data transport. In addition or as an alternative to the RADAR sensor a LIDAR sensor or a number of cameras and / or ultrasonic sensors could be applied for surrounding observation. One Ethernet-Bus adapted to the special needs of car communication is standardized in the IEEE 802.1Q specification. The ultrasonic sensor typically is used for a short distance observation, e.g. 3 to 5m. The RADAR and LIDAR sensors could be used for scanning a range up to 250 m or 150 m and the cameras cover a range from 30 to 120 m.

For the purpose of transmitting the vehicle-relevant sensor data via the communication interface 110 to another vehicle or to a central computer, the gateway 140 is provided. This is connected to the different bus systems 102, 104 and 108. The gateway 140 is adapted to convert the data it receives via the Ethernet-Bus 108 to be converted into the transmission format of the infotainment CAN-bus 102 so that it can be distributed in the packets specified there. For the forwarding of this data to the outside, i.e. to another motor vehicle or to central computer 50, the on-board unit 110 is equipped with the communication interface to receive these data packets and, in turn, to convert them into the transmission format of the correspondingly used mobile radio standard. As shown, the gateway 140 is connected as a central device to the busses 102, 104 as well as 108. It therefore takes all the necessary format conversions if data are to be exchanged between the different bus systems and if required.

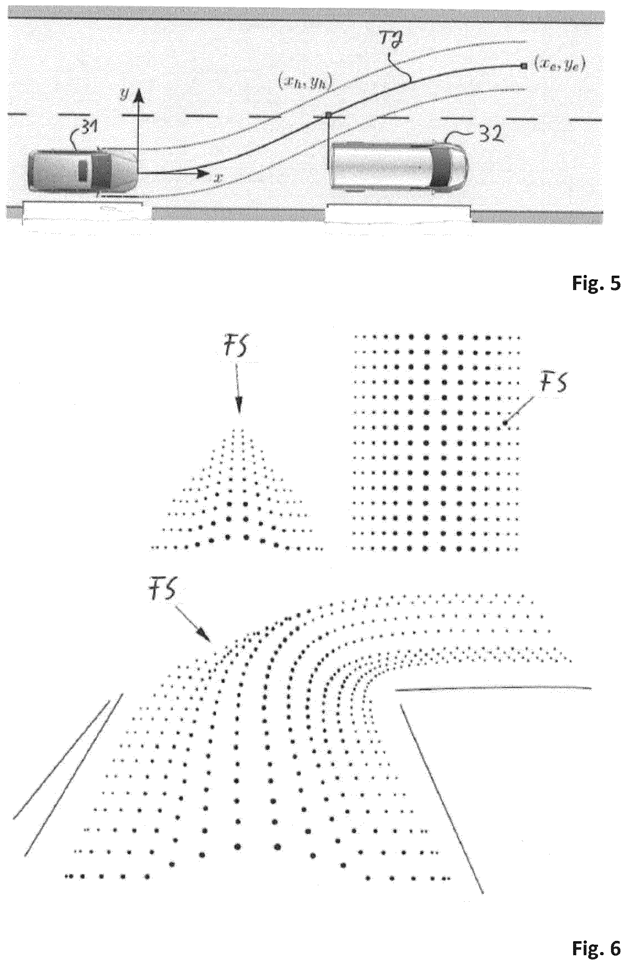

Fig. 5 shows the planning of an evasive maneuver in which the observer car 31 calculates an evasive trajectory TJ due to a preceding car 32 which stands still or brakes heavily. The way how to calculate such collision avoiding maneuver is described in a thesis report of Dr. Thomas Maurer titled "Bewertung von Mess- und Prädiktionsunsicherheiten in der zeitlichen Eingriffsentscheidung fur automatische Notbrems- und Ausweichsysteme" at University Duisburg-Essen.

Fig. 6 shows different illustrations of a driving hose FS. A very intuitive illustration is a 3D representation of the driving hose FS. It illustrates the probability for each point in lateral and longitudinal direction that the car will reach that point within the given time interval, usually a few seconds, as mentioned above. The upper right illustration is a 2D illustration where the probability is indicated with the strength of the point.

To be exact, the 3D representation is not fully correct. More in general for maneuver planning according to the invention a 4D representation of the driving hose is used. One dimension corresponds to the longitudinal direction and the second dimension to the lateral direction. The third dimension corresponds to the time and the fourth dimension to the so-called ego-probability, i.e. the probability that the observer vehicle will reach the corresponding point at the given time. Each cooperating vehicle in the collision avoidance system according to the invention will calculate this sort of 4D driving hose. Another way of interpreting the 4D driving hose is to view it as a trajectory space containing a great variety of possible trajectories the car may take.

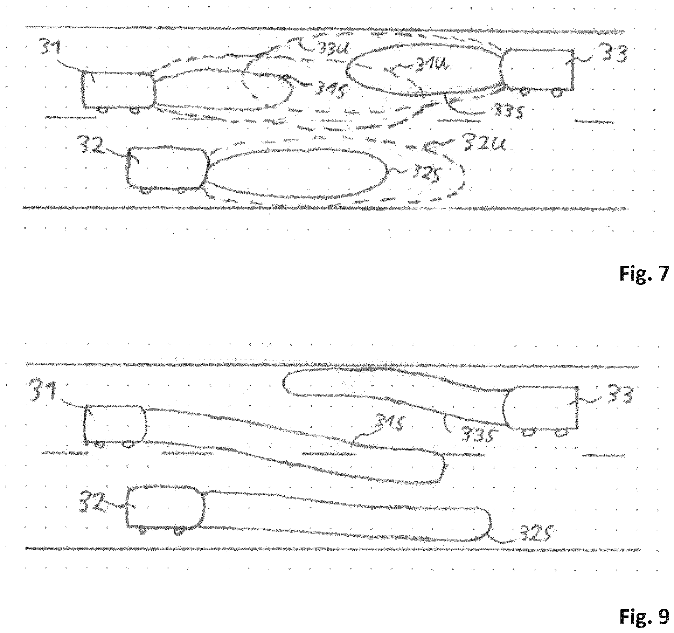

Fig. 7 shows some 2D projections of such 4D driving hoses for the three cars 31 to 32. The drawing is illustrating a typical dangerous overtaking maneuver. Car 31 is overtaking the preceding car 32 on the counter lane while another car 33 is coming along and driving in the opposite direction. Normally, any autonomous driving system should avoid this sort of situation but what is considered here is the case that the driver has taken over control of steering the car and manually forced the car into this situation. Now the collision avoidance system should intervene to avoid a collision. It is a cooperative collision avoidance system and the involved cars communicate to dissolve the dangerous situation. Each car will calculate its 4D driving hose and communicate it to the other involved cars. Fig. 7 shows the overlap of the 2D projections of the driving hoses of cars 31, 32 and 33. It is seen that the driving hoses of cars 31 and 33 overlap. There are two contours shown of each driving hose. The inner contours 31S, 32S and 33S drawn in solid line in each case shows the region which should be safe to go, i.e. where the probability of a collision is really low, e.g. less than 1%. The regions from the inner contour onwards to the outer contour 31 U, 32U, 33U are unsafe driving regions and should be avoided. As soon as a car detects the risk of a collision, this vehicle triggers broadcast message with which the cooperative collision avoidance maneuver planning is started. At the same time it starts a timer with a certain deadline. This deadline timer shall be selected such that no significant changes happens on the road within this time, i.e. it is at most in the region of a few seconds. Right after the trigger message has been sent, the same vehicle sends via broadcast its 4-dimensional tensor of its own estimated driving hose which includes the possible trajectories to go. At this moment all other vehicles in the vicinity, which received the corresponding message evaluate the relevance of this maneuver for themselves. In the example depicted in Fig. 7 all vehicles 31, 32 and 33 will find it relevant. If they find it relevant, they broadcast their own 4D space of possible trajectories linearly combined with at least some or all previously received 4D driving hoses of other partners before the timer set by the first vehicle expires. This broadcast includes the generation matrix for the linear combinations. Such combinations can follow, for example, the principles of network coding. One possible implementation of this scheme is the random linear network code (RLNC). The linear combination of trajectory spaces is envisioned to increase the robustness of exchanged information in cases of an error prone channel.

Since the broadcast message will be communicated wirelessly in a broadcast channel of the mobile communication sidelink traffic in case of an LTE mobile communication system or in a WLAN channel for WLAN based car to car communication, the linear combination corresponding to linear network coding should definitely improve the robustness.

For sidelink traffic the broadcast messages will be submitted in the SL-PSBCH channel. The methodology how vehicles access the medium for broadcast can be arbitrary.
When a UE (user equipment) joins a network, it goes through a network entry phase. The purpose of the network entry phase is for the current UE to transmit a Network Entry Packet (NEP), a one-time special transmission which is meant to inform all the other UEs within range of the current one that it is about to join the network. The slot for the transmission of the NEP is chosen using the Random Access Time-Division Multiple Access (RATDMA) protocol, which "is used when a station needs to allocate a slot, which has not been pre-announced". After the UE has entered the network, for the sidelink traffic an STDMA (self-organised TDMA) MAC layer protocol has been adopted where TDMA is the well-known time division multiple access method where time slots will be assigned to participants. If for the considered scenario the RATDMA access is not reliable enough, one possible approach could be that when a vehicle broadcasts its status, it points out who will broadcast next (until all vehicles in the vicinity have broadcasted). This is possible if one bears in mind that under the considered scenario of cooperative or autonomous driving the vehicles anyhow broadcast so-called Cooperative Awareness Messages CAM periodically such that they are aware which other vehicles are in the vicinity.

After the deadline time has passed, no further trajectories spaces are being considered. Since all vehicles influence each other on the road to some extent the exchanged trajectories spaces will also have certain correlation, which means that some level of information about one road participant will be already present in the trajectory space sent by another vehicle. This additionally adds further redundancy, when some of the sent trajectory spaces were not received by some of the involved vehicles.

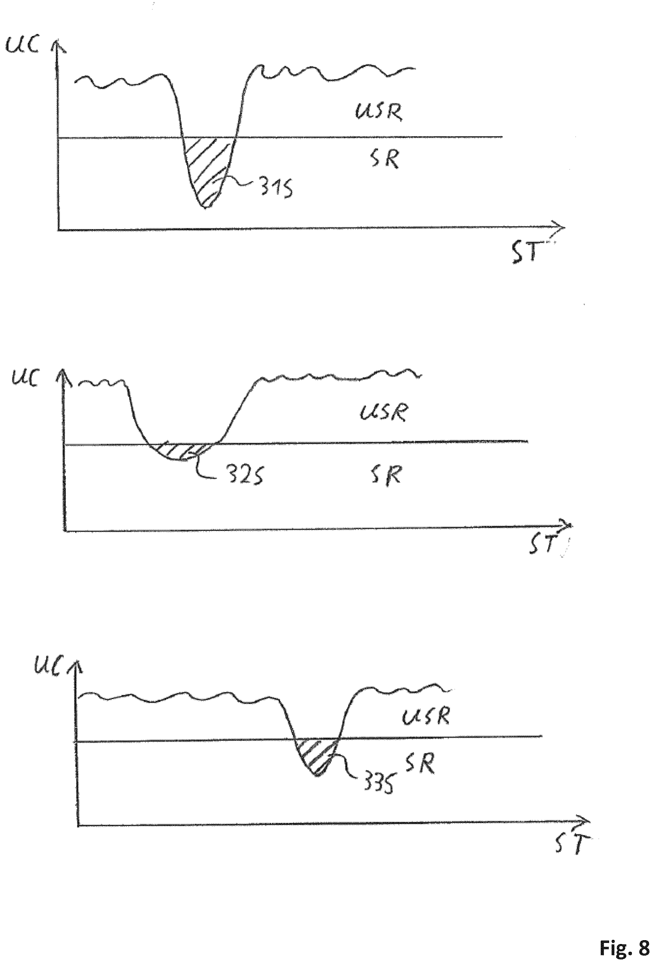

After having received the 4D driving hoses from all involved cars, each car evaluates the situation and calculates its own safe region and selects from this region an evasive trajectory for its own car to dissolve the dangerous situation. For this, each vehicle decodes the linearly combined 4D driving hoses. At this point, it is assumed that all vehicles will have the same set of 4D spaces. The way this is done, is illustrated in Fig. 8. It is noted that the 4D driving hoses will be mathematically represented in the form of a tensor.

Thus each vehicle correlates all received trajectory spaces with its own over space and time to find the mutual global safe region which fulfills certain pre-defined safety requirements. Since each vehicle has the same set of trajectory spaces, the solution found at each vehicle will fulfill the requirements of each vehicle. If the found solution at any vehicle does not fulfill the pre-defined safety requirements, the vehicle informs all other vehicles, that it is not able to successfully complete the maneuver and that the maneuver of collision minimization has to be started instead of collision avoidance. Fig. 8 shows the results of the correlation calculation and the solution of the optimization problem for each of the cars 31, 32 and 33. For the abscissa the space and time ST is lined up. On the ordinate the correlation level UC is depicted. The upper region USR corresponds to the unsafe region. The lower region SR in which the global minimum lies, corresponds to the safe region. The hatched sections of the correlation result curves correspond to the safe regions 31 S, 32S and 33S where the corresponding car should stay in order to avoid collision. The correlation calculation follows the following steps:
- Calculation of the correlation coefficients
- Calculation of the inverse of the covariance matrix
- Setting up of a global cost function
- Calculation of the global minimum.

In the case if some messages were lost and the available redundancy and RLNC encoding was not sufficient for some vehicle to receive some of the trajectory spaces, then this vehicle has to find the common correlated optima based on limited available information. After this, the found solution is being compared with the final post-correlation exchanged solutions.

Fig. 9 finally shows a projection of the mutual safe regions 31 S, 32S, 33S of a driving hose for each car 31, 32, 33 in order to avoid collision.

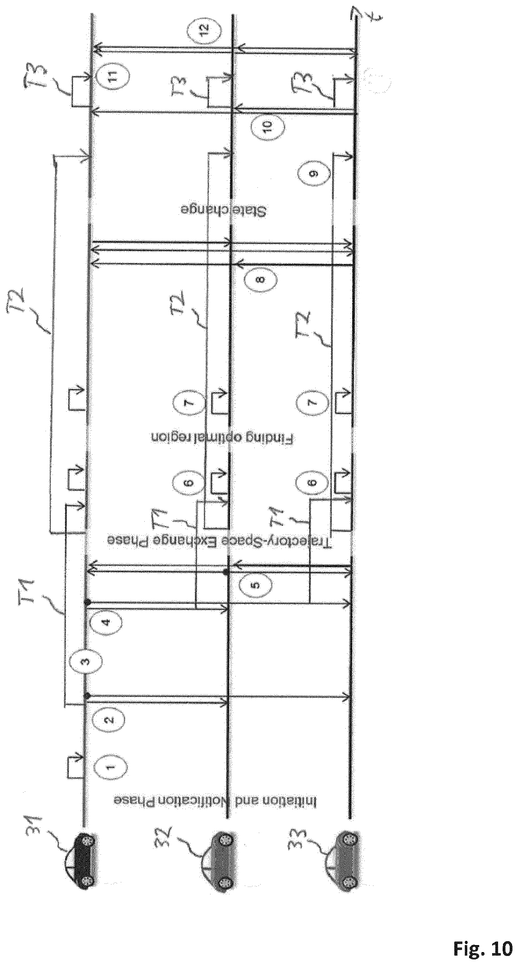

Fig. 10 now shows the different phases of the cooperative collision avoidance maneuver. Car 31 at step 1 with its sensor equipment detects the risk of a collision. As soon as the risk is detected, car 31 sends out a broadcast message in step 2 to the surrounding vehicles on the road via sidelink communication channel SL-PSBCH. In the broadcast warning message a value for a timer setup is communicated, too. At step 4 car 31 sends its own 4D driving hose (space, time and ego-likelihood) in another broadcast message. This message further includes the start and end time for a timer setup. These time values are selected such that no significant changes happens on the road within this time. The two involved cars 32 and 33 in step 4 setup a timer T1 each with the values which they received in the broadcast message of step 4 and start the timer. This timer T1 determines the length of the phase for data collection, i.e. trajectory space exchange phase. At step 5 the two other participants car 32 and car 33 broadcast their own 4D driving hoses. At step 6 each vehicle correlates over time and with its ego preferences all received 4D driving hoses and calculates the mutual safe regions 31 S, 32S and 33S in the manner as explained above. If a car is not able to find a safe region, this car should initiate a change in the CCA state. The safety concept requires that a change to a collision minimization state CMS should be made if the cooperative collision avoidance state CCA does not find a solution for dissolving the dangerous situation. At step 8 in Fig. 10 each car selects the preferred trajectory from the determined safe region and sends it to the other involved cars in a broadcast message. If a car did not find a safe region, it would change to CMS state and it would broadcast a corresponding signaling message. All the cars sending such a message and receiving such a message would need to immediately change to the CMS state. Another timer T2 is being setup during step 4. This timer may be a relative timer which is dependent from the T1 timer such that timer T2 does not need to be broadcasted. Timer T2 sets up a deadline up to when a preferred trajectory from a mutual safe region or a change of state message must have been received from the involved cars. The timer is stopped when a preferred trajectory or a state change message has been received. When timer T2 expires at step 9 and from an involved car neither the preferred trajectory nor the state change message has come, the recognizing car 33 is sending out a retransmission request broadcast message at step 10. Such car also starts a timer T3. With expiration of timer T3 at step 11 the car is triggered to change its state to CMS state. In addition, such car will broadcast an announcement that it has changed to CMS state to stop the cooperative collision avoidance maneuver.

The found mutual safe region 31S, 32S, 33S based on correlated optima's is being then additionally broadcasted to ensure an additional cross-check whether the found solution is suitable for all vehicles in the vicinity.

In the case if some messages were lost and the available redundancy and encoding was not sufficient for some vehicle to receive some of the trajectory spaces, then this vehicle has to find the common correlated optima based on limited available information. But since, the found solution is being compared with the final post-correlation exchanged solutions being broadcasted, no additional action is required if the solution found from limited information is still within the tolerable region. Otherwise, the vehicle informs its neighbors that it is not able to successfully complete the maneuver and that the maneuver of collision minimization has to be started instead of collision avoidance.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

The disclosure is not restricted to the exemplary embodiments described here. There is scope for many different adaptations and developments which are also considered to belong to the disclosure.

The application possibilities for the described methods are not limited to use in the motor vehicle. The approach for solving the problem of collision avoidance may also be applied in other areas. Examples include aircrafts and drones, as well as mobile robotics in a wide range of areas.

### Reference Sign List

- 10: Internet
- 20: Base Station
- 30: Car
- 30U: Unsafe Region
- 30S: Safe Region
- 31: Car
- 31 U: Unsafe Region
- 31S: Safe Region
- 32: Car
- 32U: Unsafe Region
- 32S: Safe Region
- 33: Car
- 33U: Unsafe Region
- 33S: Safe Region
- 40: Evolved Packet Core EPC
- 50: Traffic Control Center Computer
- 100: Block Diagram Car Communication
- 102: High-speed CAN-Bus
- 105: Camera
- 104: CAN-Bus
- 108: Ethernet-Bus
- 110: On-Board Unit
- 120: Navigation System
- 130: User Interface
- 140: Gateway
- 151: Engine Control Unit
- 152: ESC-Control Unit
- 153: Transmission Control Unit
- 161: Sensor 1
- 162: Sensor 2
- 163: Sensor 3
- 171: Driver Assist Control Unit
- 172: Radar Device
- TJ: Trajectory
- FS: Driving Hose
- USR: Unsafe Region
- SR: Safe Region
- T1: 1^{st} timer
- T2: 2^{nd} timer
- T3: 3^{rd} timer

## Claims

1. Method for planning a collision avoidance maneuver, comprising the steps of observing the surroundings of a vehicle (31), determining the risk of a collision, if there is a risk of a collision, starting an information exchange phase for the involved vehicles (31, 32, 33), **characterized in that** during the information exchange phase an involved vehicle (31, 32, 33) submits its own driving hose (FS) to the involved vehicles (31, 32, 33), starting an evaluation phase in which a vehicle (31, 32, 33) evaluates its own and the received driving hoses (FS) from the other involved vehicles (31, 32, 33), and determining a mutual safe region (31 S, 32S, 33S) for the involved vehicles (31, 32, 33) to go for avoiding the collision.

2. Method according to claim 1, further comprising submitting the mutual safe region (31S, 32S, 33S) to the involved vehicles (31, 32, 33), checking if the mutual safe region (31 S, 32S, 33S) received from the other involved vehicles (31, 32, 33) fulfills the own safety requirements, and if not, changing the state from collision avoidance to collision minimization and informing the other involved vehicles (31, 32, 33) about the change of state and if yes, selecting a preferred trajectory from the mutual safe region (31S, 32S, 33S).

3. Method according to claim 1 or 2, wherein the driving hose (FS) of a vehicle (31, 32, 33) corresponds to a 4-dimensional tensor with information about longitudinal and lateral position of the vehicle (31, 32, 33) over time and over the probability that the vehicles (31, 32, 33) reaches the corresponding point in time.

4. Method according to one of the previous claims, wherein the evaluation of the driving hoses (FS) from the involved vehicles (31, 32, 33) includes the calculation of a correlation of the driving hoses (FS) received from the other involved vehicles (31, 32, 33) over space and time with the own driving hose (FS).

5. Method according to one of the previous claims, wherein the preferred trajectory (TJ) from the mutual safe region (31S, 32S, 33S) is submitted to the involved vehicles (31, 32, 33) for checking.

6. Method according to one of the previous claims, wherein linear network coding is used for submitting the own driving hose (FS).

7. Method according to claim 6, wherein for linear network coding the own driving hose (FS) will be linearly combined with the previously received driving hoses (FS) from the other involved vehicles (31, 32, 33) and the generation matrix for the linear combination is included in the message submitting the own driving hose (FS).

8. Method according to claim 7, wherein the technique of random linear network code RLNC is used for linear network coding.

9. Method according to one of the previous claims, wherein the involved vehicles (31, 32, 33) broadcast the driving hose (FS) in the information exchange phase.

10. Method according to one of the previous claims, wherein the minimum allowed distance between two vehicles (31, 32, 33) at a time in the future and/or the probability that two vehicles (31, 32, 33) end up at the same place at a time in the future are used as a safety requirement.

11. Method according to one of the previous claims, wherein the vehicle (31) which detects the risk of a collision starts the information exchange phase by broadcasting a warning message to the surrounding vehicles (31, 32, 33).

12. Method according to claim 11, wherein a timer (T1) for the information exchange phase is started at least in the vehicle (31) which detected the risk of a collision and wherein the warning message includes information about the timer (T1) for the information exchange phase.

13. Method according to one of the previous claims, wherein a timer (T2) for the evaluation phase is started and when the timer (T2) expires without having received a preferred trajectory (TJ) from one of the involved vehicles (31, 32, 33), changing the state from collision avoidance to collision minimization and informing the other involved vehicles (31, 32, 33) about the change of state.

14. Control unit, **characterized in that**, the control unit (171) is adapted to perform the steps of one of the previous claims.

15. Vehicle, **characterized in that**, the vehicle (30) is equipped with a control unit (171) according to claim 14.

16. Computer program, **characterized in that**, the computer program comprises program steps, which when run in a computer carry out a method according to one of the claims 1 to 13.
